# EUROPÄISCHE PATENTSCHRIFT

(11) **EP 4 686 812 B1**
(45) Veröffentlichungstag und Bekanntmachung des Hinweises auf die Patenterteilung: **11.11.2026**
(21) Anmeldenummer: 25190098.1
(22) Anmeldetag: 17.07.2025
(51) Int. Cl.: F01N 3/20, F01N 5/04, F01N 13/00, F01N 13/08, F01N 13/10, F01N 13/18, F02B 37/00

(54) **BRENNKRAFTMASCHINE**
INTERNAL COMBUSTION ENGINE
MOTEUR À COMBUSTION INTERNE

(30) Priorität: 02.08.2024 DE 102024122081
(43) Veröffentlichungstag der Anmeldung: 04.02.2026
(73) Patentinhaber: Everllence SE, 86153 Augsburg (DE)
(72) Erfinder: Söngen, Matthias, 86156 Augsburg (DE)

(56) Entgegenhaltungen:
- EP-B1- 0 356 378
- DE-A1- 102022 132 796
- FR-A1- 2 905 978
- JP-A- 2016 075 279
- KR-A- 20160 116 428
- US-A1- 2013 061 831

## Beschreibung

Die Erfindung betrifft eine Brennkraftmaschine.

Die hier vorliegende Erfindung betrifft insbesondere den Bereich sogenannter Großmotoren bzw. Großbrennkraftmaschinen, deren Zylinder Kolbendurchmesser von mindestens 140 mm, insbesondere von mindestens 175 mm, aufweisen. Bei solchen Großbrennkraftmaschinen handelt es sich zum Beispiel um Schiffsmotoren.

DE 10 2016 205 327 A1 offenbart eine Brennkraftmaschine mit einem ein Abgasaufladungssystem aufweisenden Abgasnachbehandlungssystem. Das Abgasaufladungssystem verfügt vorzugsweise über einen Hochdruckabgasturbolader und einen Niederdruckabgasturbolader, wobei in den Abgasturboladern thermische Energie des Abgases in mechanische Energie gewandelt werden kann, um der Brennkraftmaschine zuzuführende Ladeluft zu verdichten. Das Abgasnachbehandlungssystem verfügt weiterhin über ein SCR-Abgasreinigungssystem, welches dazu eingerichtet ist, Abgas der Brennkraftmaschine zu reinigen. Das SCR-Abgasreinigungssystem ist dabei vorzugsweise zwischen eine Hochdruckturbine des Hochdruckabgasturboladers und eine Niederdruckturbine des Niederdruckabgasturboladers geschaltet. Demnach offenbart die DE 10 2016 205 327 A1 die Merkmale des Oberbegriffs des Anspruchs 1.

Die nachveröffentlichte DE 10 2023 103 784 A1 offenbart ebenfalls eine Brennkraftmaschine mit einem ein Abgasaufladungssystem aufweisenden Abgasnachbehandlungssystem.

DE 10 2022 132 796 A1, US 2013 / 061 831 A1, FR 2 905 978 A1,
KR 2016 0116428 A, EP 0 356 378 B1, EP 2 527 611 A1 und JP 2016- 75 279 A offenbaren weiteren Stand der Technik.

Es besteht Bedarf an einer Brennkraftmaschine, bei welcher eine effektive Abgasreinigung mit hoher Umsatzrate, bei geringem Bauraumbedarf, bei geringer Masse und damit geringer thermischer Speicherkapazität und bei geringer Schwingungsbelastung im Bereich einer Abgasreinigungseinrichtung möglich ist.

Hiervon ausgehend liegt der vorliegenden Erfindung die Aufgabe zugrunde, eine neuartige Brennkraftmaschine zu schaffen. Diese Aufgabe wird durch eine Brennkraftmaschine nach Anspruch 1 gelöst.

Die erfindungsgemäße Brennkraftmaschine weist mehrere Zylinder auf, die eingerichtet sind, Kraftstoff zu verbrennen, wobei hierbei Abgas entsteht, wobei die Zylinder mindestens eine Zylindergruppe aus mehreren in Reihe angeordneten Zylindern bilden. Die erfindungsgemäße Brennkraftmaschine weist ein Abgasnachbehandlungssystem auf, welches eine Abgasreinigungseinrichtung umfasst, die eingerichtet ist, das Abgas der Zylinder zu reinigen, und welches mindestens einen Abgasturbolader umfasst, der eingerichtet ist, das Abgas der Zylinder zu entspannen und hierbei Energie zu gewinnen.

Die Abgasreinigungseinrichtung der erfindungsgemäßen Brennkraftmaschine weist mehrere Abgasreinigungselemente auf, die jeweils mindestens ein in einem als Druckbehälter dienenden Canning angeordnetes Katalysatorelement aufweisen, wobei eine Wandstärke des Cannings auf einen Abgasdruck bis zu 4 bar oder bis zu 5 bar oder bis zu 6 bar ausgelegt.

Die Abgasreinigungseinrichtung der erfindungsgemäßen Brennkraftmaschine weist ferner ein sich entlang der mindestens einen Zylindergruppe erstreckendes Abgassammelrohr, ein sich entlang der mindestens einen Zylindergruppe erstreckendes Abgaszuleitungsrohr und mindestens ein sich entlang der mindestens einen Zylindergruppe erstreckendes Abgasableitungsrohr auf, über die das Abgas derart leitbar ist, dass ausgehend von einem Abgasauslasskanal des jeweiligen Zylinders das Abgas des jeweiligen Zylinders dem Abgassammelrohr zuführbar ist, und dass abhängig von einem Schaltzustand einer Schalteinheit das Abgas in einem ersten Schaltzustand der Schalteinheit ausgehend vom Abgassammelrohr in das Abgaszuleitungsrohr, über das Abgaszuleitungsrohr in Richtung auf die Abgasreinigungselemente, nach Durchströmung der Abgasreinigungselemente in das Abgasableitungsrohr und über das Abgasableitungsrohr in Richtung auf den mindestens einen Abgasturbolader leitbar ist, und in einem zweiten Schaltzustand der Schalteinheit unter Umgehung der Abgasreinigungselemente ausgehend Abgassammelrohr unmittelbar in Richtung auf den mindestens einen Abgasturbolader leitbar ist.

Das Abgassammelrohr, das Abgaszuleitungsrohr und das Abgasableitungsrohr der Abgasreinigungseinrichtung der erfindungsgemäßen Brennkraftmaschine weisen jeweils mehrere Rohrabschnitte mit zwischen den Rohabschnitten angeordneten Kompensatoren zur Kompensation von thermischen Ausdehnungen auf.

Mit den Abgasreinigungselementen der Abgasreinigungseinrichtung der erfindungsgemäßen Brennkraftmaschine wirken weitere Kompensatoren zur Kompensation von thermischen Ausdehnungen und zur Schwingungskompensation zusammen.

Die erfindungsgemäße Brennkraftmaschine erlaubt eine effektive Abgasreinigung bei hoher Umsatzrate, bei geringem Bauraumbedarf, bei geringer Masse und damit geringer thermischer Speicherkapazität und bei geringer Schwingungsbelastung im Bereich der Abgasreinigungseinrichtung. Die Abgasreinigungselemente, die unmittelbar benachbart zu den Zylindern der Brennkraftmaschine im Bereich des sich entlang der jeweiligen Zylindergruppe erstreckenden Abgassammelrohrs, des sich entlang der jeweiligen Zylindergruppe erstreckenden Abgaszuleitungsrohrs und des sich entlang der jeweiligen Zylindergruppe erstreckenden Abgasableitungsrohrs verbaut sind, werden bei hohem Temperatur- und Druckniveau stromaufwärts des mindestens eines Abgasturboladers vom Abgas durchströmt, und zwar mit einer nahezu konstanten Durchströmungsgeschwindigkeit nahezu ohne Druckpulsation. Die Cannings der Abgasreinigungselemente, die auf einen Abgasdruck bis zu 4 bar oder bis zu 5 bar oder bis zu 6 bar oder bis zu 10 bar ausgelegt sind, wirken unmittelbar als Druckbehälter und machen separate Druckbehälter zur Aufnahme der Abgasreinigungselemente überflüssig. Dies ist zur Reduzierung der Masse und damit der thermischen Speicherkapazität im Bereich der Abgasreinigungseinrichtung von Bedeutung, um eine vorteilhaftes transientes Betriebsverhalten der Brennkraftmaschine zu gewährleisten. Über die Kompensatoren können thermische Ausdehnungen und mechanische Schwingungen im Bereich der Abgasreinigungseinrichtung kompensiert werden. Letztendlich ist durch die Kombination der obigen Merkmale eine effektive Abgasreinigung bei hoher Umsatzrate, bei geringem Bauraumbedarf, bei geringer Masse und damit geringer thermischer Speicherkapazität und bei geringer Schwingungsbelastung im Bereich einer Abgasreinigungseinrichtung möglich.

Vorzugsweise sind die Abgasreinigungselemente, nämlich die Katalysatorelemente derselben, in einer Richtung senkrecht zur Durchströmungsrichtung des Abgassammelrohrs, des Abgaszuleitungsrohrs und des Abgasableitungsrohrs von Abgas durchströmt. Die erlaubt die Anordnung der Abgasreinigungselemente zwischen dem Abgaszuleitungsrohr und dem Abgasableitungsrohr bei geringem Bauraumbedarf. Ferner erlaubt dies die Durchströmung der Katalysatorelemente bei hohem Temperatur- und Druckniveau sowie bei nahezu konstanter Durchströmungsgeschwindigkeit und nahezu ohne Druckpulsation. Auch diese Merkmale dienen demnach der Bereitstellung einer effektiven Abgasreinigung bei hoher Umsatzrate, geringem Bauraumbedarf sowie geringer Masse und geringer Schwingungsbelastung im Bereich der Abgasreinigungseinrichtung.

Vorzugsweise beträgt die Wandstärke der Cannings zwischen 1,5 mm und 6 mm, vorzugsweise zwischen 1,5 mm und 5 mm oder zwischen 1,5 mm und 4 mm oder zwischen 1,5 mm und 3 mm oder zwischen 1,5 mm und 2 mm oder zwischen 2 mm und 5 mm oder zwischen 2 mm und 4 mm oder zwischen 2 mm und 3 mm oder zwischen 3 mm und 5 mm oder zwischen 3 mm und 4 mm. Diese Wandstärken der Cannings sind bevorzugt, damit die Cannings bei einem Abgasdruck von bis zu 4 bar oder bis zu 5 bar oder bis zu 6 bar oder bis zu 10 bar direkt als Druckbehälter dienen können, um so auf separate Druckbehälter zu verzichten. Dies ist von besonderem Vorteil, um den Bauraumbedarf und die Masse sowie thermische Speicherkapazität im Bereich der Abgasreinigungseinrichtung gering zu halten und so eine effektive Abgasreinigung sowie ein gutes transientes Betriebsverhalten zu ermöglichen.

Vorzugsweise sind jeweils mehrere, vorzugsweise zwei oder drei, Abgasreinigungselemente in Reihe hintereinander und entlang der mindestens einen Zylindergruppe mehrere solche Reihenanordnungen aus Abgasreinigungselementen parallel zueinander zwischen das Abgaszuleitungsrohr und das Abgasableitungsrohr geschaltet, wobei stromaufwärts oder stromabwärts der Abgasreinigungselementen Blenden angeordnet sind, um entlang der mindestens einen Zylindergruppe die Abgasströmung über die Abgasreinigungselemente zu vergleichmäßigen. Auch dies dient der Gewährleistung einer effektiven Abgasreinigung bei geringem Bauraumbedarf.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1:: eine Vorderansicht eines Ausschnitts aus einer Brennkraftmaschine in R-Bauweise im Bereich einer Abgasreinigungseinrichtung der Brennkraftmaschine;
- Fig. 2: eine ausschnittsweise Draufsicht in Blickrichtung II auf die Brennkraftmaschine der Fig. 1;
- Fig. 3: eine Vorderansicht eines Ausschnitts aus einer Brennkraftmaschine in V-Bauweise im Bereich einer Abgasreinigungseinrichtung der Brennkraftmaschine;
- Fig. 4: eine ausschnittsweise Draufsicht in Blickrichtung IV auf die Brennkraftmaschine der Fig. 2;
- Fig. 5: eine Seitenansicht der Abgasreinigungseinrichtung der Brennkraftmaschine der Fig. 3, 4;
- Fig. 6: ein Detail der Abgasreinigungseinrichtung der Brennkraftmaschinen der Fig 1, 2 und Fig. 3, 4, 5 mit mehreren Ausführungsvarianten;
- Fig. 7: eine weitere Ausführungsvariante für Fig. 6;
- Fig. 8: eine weitere Ausführungsvariante für Fig. 6;
- Fig. 9: ein Detail der Fig. 6 in Schnittrichtung IX-IX;
- Fig. 10: eine Alternative zum Detail der Fig. 9;
- Fig. 11: ein Alternative zum Detail der Fig. 6 mit mehreren Ausführungsvarianten;
- Fig. 12: eine weitere Ausführungsvariante für Fig. 11.

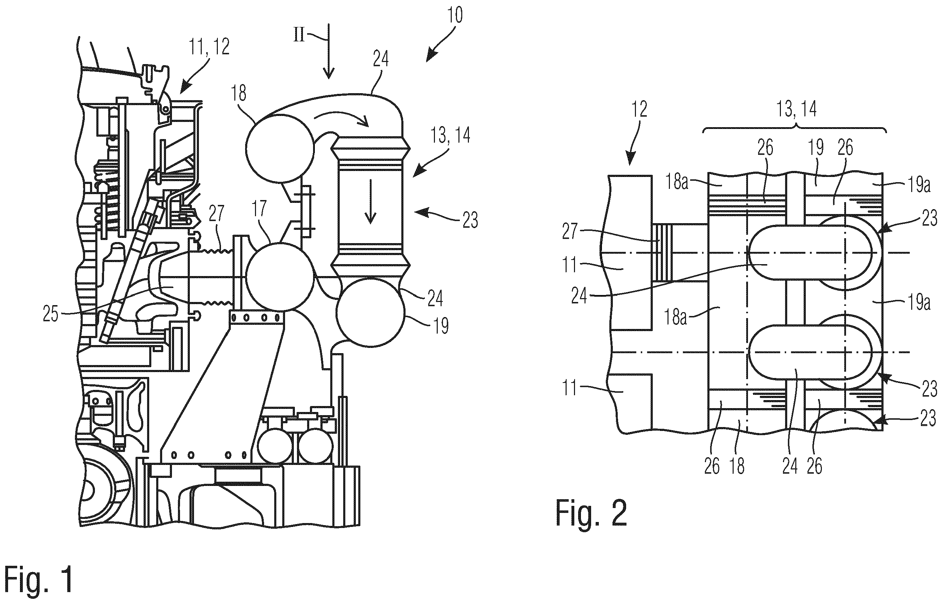

Fig. 1, 2 zeigen unterschiedliche Ansichten eines Ausführungsbeispiels einer erfindungsgemäßen Brennkraftmaschine 10, die mehrere Zylinder 11 aufweist, die in einer Reihe nebeneinander angeordnet und eine einzige Zylindergruppe 12 ausbilden. Die Brennkraftmaschine 10 der Fig. 1, 2 ist eine Brennkraftmaschine in R-Bauweise.

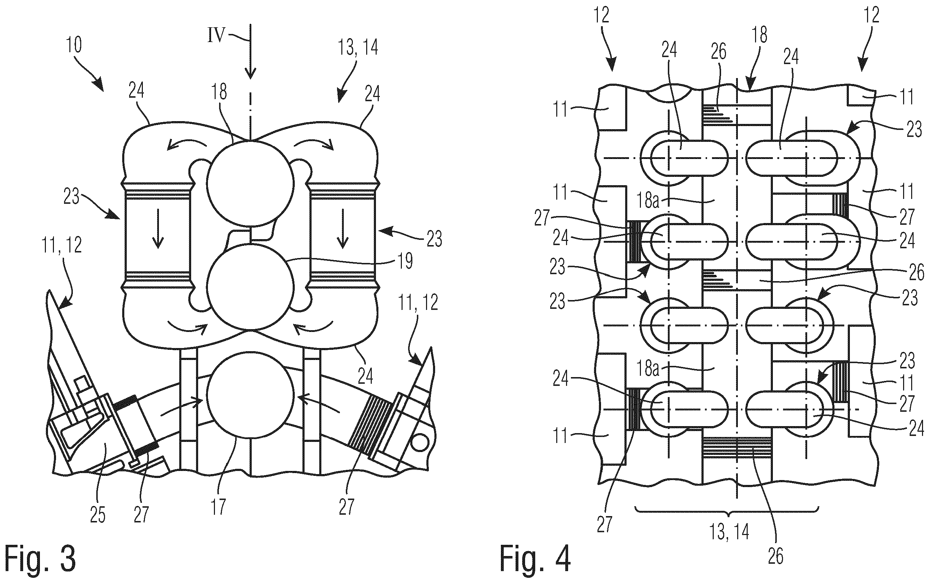

Es sei bereits an dieser Stelle darauf hingewiesen, dass die Zylinder 11 der Brennkraftmaschine 10 auch unter Ausbildung von zwei Zylindergruppen 12 aus jeweils mehreren in Reihe positionierten Zylindern 11 angeordnet sein. In diesem Fall sind dann die Zylinder 11 der beiden Zylindergruppen 12 in V-Anordnung zueinander ausgerichtet. Fig. 3, 4 und 5 zeigen Details einer erfindungsgemäßen Brennkraftmaschine 10 in V-Bauweise. Die Anzahl der Zylinder 11 sowie die Anzahl der Zylindergruppen 12 ist beliebig.

Die Brennkraftmaschine 10 weist ein Abgasnachbehandlungssystem 13 auf, wobei das Abgasnachbehandlungssystem 13 eine Abgasreinigungseinrichtung 14 und weiterhin mindestens einen Abgasturbolader 15 aufweist. Der mindestens eine Abgasturbolader 15 ist eingerichtet, das Abgas der Zylinder 11, welches in der Abgasreinigungseinrichtung 14 gereinigt wurde, zu entspannen, um hierbei mechanische Energie zu gewinnen und zur Verdichtung von den Zylindern 11 zuzuführender Ladeluft zu nutzen. Der jeweilige Abgasturbolader 15 verfügt über eine Turbine 16 zur Entspannung des gereinigten Abgases sowie über einen Verdichter (nicht gezeigt) zur Verdichtung der Ladeluft. Stromaufwärts des Verdichters kann ein Schalldämpfer (nicht gezeigt) positioniert sein.

Die Abgasreinigungseinrichtung 13 der Brennkraftmaschine 10 weist ein sich entlang der mindestens einen Zylindergruppe 12 erstreckendes Abgassammelrohr 17, ein sich entlang der mindestens einen Zylindergruppe 12 parallel zum Abgassammelrohr 17 erstreckendes Abgaszuleitungsrohr 18 sowie weiterhin ein sich ebenfalls entlang der mindestens einen Zylindergruppe 10 parallel zum Abgassammelrohr 12 erstreckendes Abgasableitungsrohr 19 auf. Ferner weist die Abgasreinigungseinrichtung 13 mehrere Abgasreinigungselemente 20 auf, die jeweils mindestens ein in einem Canning 21 angeordnetes Katalysatorelement 22 aufweisen. An mehreren Positionen entlang der mindestens einen Zylindergruppe 12 sind im gezeigten Ausführungsbeispiel zwischen das Abgaszuleitungsrohr 18 und das Abgasableitungsrohr 19 Reihenanordnungen 23 aus mehreren in Reihe hintereinander angeordneten Abgasreinigungselementen 20 angeordnet, wobei die Reihenanordnungen 23 aus den in Reihe hintereinander angeordneten Abgasreinigungselementen 20 parallel zueinander zwischen das Abgaszuleitungsrohr 18 und das Abgasableitungsrohr 19 geschaltet sind.

Im Ausführungsbeispiel der Fig. 1 und 2 ist das Abgaszuleitungsrohr 18 mit jeder der Reihenanordnungen 23 aus mehreren Abgasreinigungselementen 20 über einen Verbindungskrümmer bzw. Überströmkanal 24 verbunden, sodass das Abgas vom Abgaszuleitungsrohr 18 den Abgasreinigungselementen 20, nämlich den parallel zueinander geschalteten Reihenanordnungen 23 aus jeweils mehreren Abgasreinigungselementen 20 zugeführt werden kann. Ferner ist jeder der Reihenanordnungen 23 aus mehreren Abgasreinigungselementen 20 über einen Verbindungskrümmer bzw. Überströmkanal 24 mit dem Abgasableitungsrohr 19 verbunden, sodass das Abgas vom von den Reihenanordnungen 23 aus jeweils mehreren Abgasreinigungselementen 20 in das Abgasableitungsrohr 19 überströmen kann.

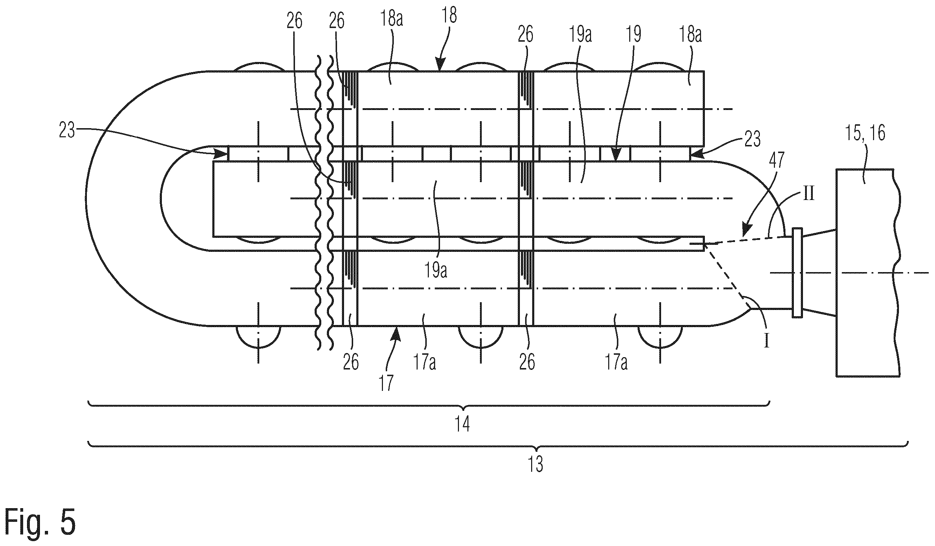

Das Abgassammelrohr 17, das Abgaszuleitungsrohr 18 und das Abgasableitungsrohr 19 sind derart von Abgas durchströmt, dass zunächst das Abgas des jeweiligen Zylinders 11 ausgehend von einem Abgasauslasskanal 25 des jeweiligen Zylinders 11 in das Abgassammelrohr 17 strömt. Das Abgas kann in einem ersten Schaltzustand einer Schalteinheit 47, die für das Ausführungsbeispiel der Fig. 1 bis 5 in Fig. 5 gezeigt ist, ausgehend vom Abgassammelrohr 17 in das Abgaszuleitungsrohr 18 strömen, um über das Abgaszuleitungsrohr 18 und in Fig. 1, 2 die Überströmkanäle 24 in Richtung auf die Abgasreinigungselemente 20 der Reihenanordnungen 23 zu strömen. Nach Durchströmung der Abgasreinigungselemente 20 der Reihenanordnungen 23 ist das Abgas in das Abgasableitungsrohr 19 leitbar, um über das Abgasableitungsrohr 19 in Richtung auf den mindestens Abgasturbolader 15, nämlich die Turbine 16 dessen, zu strömen. In einem zweiten Schaltzustand der Schalteinheit 47 ist das Abgas unter Umgehung der Abgasreinigungselemente 23, ausgehend vom Abgassammelrohr 17 direkt in Richtung auf den mindestens einen Abgasturbolader 15 leitbar.

Das Abgassammelrohr 17, das Abgaszuleitungsrohr 18, das Abgasableitungsrohr 19 sowie die Abgasreinigungselemente 20 sind demnach in unmittelbarer Nähe zu den Zylindern 11 an der Brennkraftmaschine 10 verbaut.

Wie bereits ausgeführt, weisen die Abgasreinigungselemente 20, die im gezeigten Ausführungsbeispiel in parallel zueinander geschalteten Reihenanordnungen 23 aus jeweils mehreren in Reihe geschalteten Abgasreinigungselementen 20 gruppiert sind, jeweils ein Canning 21 auf, welches erfindungsgemäß auf einen Abgasdruck von bis zu 4 bar oder bis zu 5 bar oder bis zu 6 bar oder bis zu 10 bar ausgelegt ist, sodass demnach das jeweilige Canning 21 unmittelbar als Druckbehälter für die Abgasreinigungselemente 20 wirkt, sodass auf separate Druckbehälter verzichtet werden kann. Hierzu weisen die Cannings 21 vorzugsweise eine Wandstärke zwischen 1,5 mm und 6 mm oder zwischen 1,5 mm und 5 mm oder zwischen 1,5 mm und 4 mm oder zwischen 1,5 mm und 3 mm oder zwischen 1,5 mm und 2 mm oder zwischen 2 mm und 6 mm oder zwischen 2 mm und 5 mm oder zwischen 2 mm und 4 mm oder zwischen 2 mm und 3 mm oder zwischen 3 mm und 6 mm oder zwischen 3 mm und 5 mm oder zwischen 3 mm und 4 mm oder zwischen 4 mm und 5 mm auf. Hierdurch kann auf separate Druckbehälter, die viel Bauraum benötigen und darüber hinaus ein hohes Gewicht und damit eine hohe thermische Speicherkapazität aufweisen, verzichtet werden. Hiermit kann insbesondere das transiente Betriebsverhalten der Brennkraftmaschine bei der Überführung derselben zwischen unterschiedlichen Betriebszuständen und die Abgasreinigung im transienten Betriebsverhalten verbessert werden.

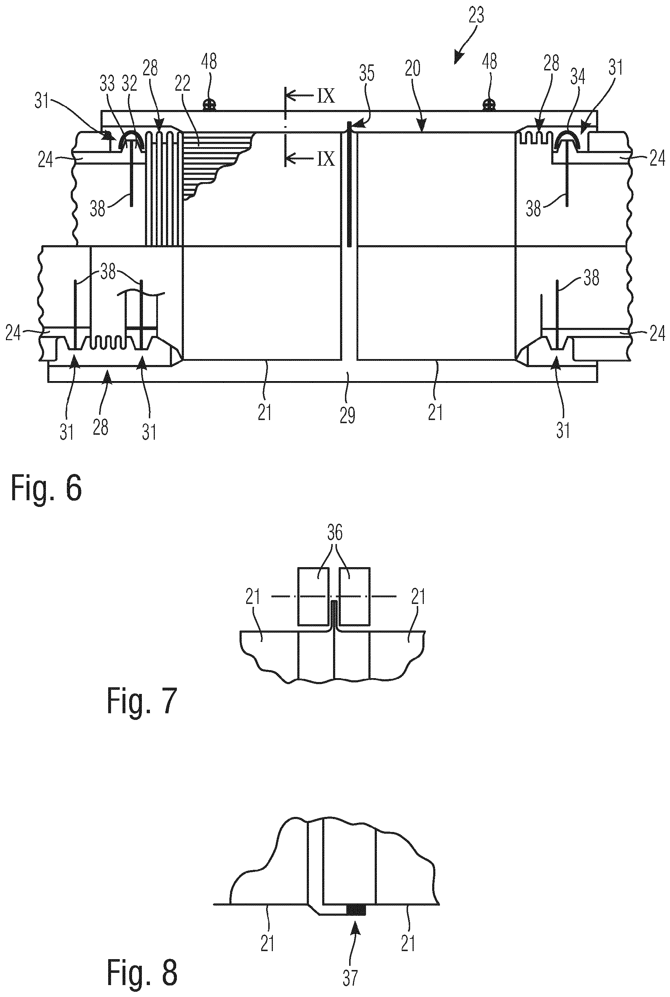

Das Abgassammelrohr 17, das Abgaszuleitungsrohr 18 und das Abgasableitungsrohr 19 weisen jeweils mehrere Rohrabschnitte 17a, 18a bzw. 19a auf, zwischen welchen Kompensatoren 26 zur Kompensation von thermischen Ausdehnungen angeordnet sind. Auch zwischen den Abgasauslasskanal 25 des jeweiligen Zylinders 11 und das Abgassammelrohr 17 sind Kompensatoren 27 zur Kompensation thermischer Ausdehnungen geschaltet. Auch im Bereich der Reihenanordnungen 23 aus in Reihe geschalteten Abgasreinigungselementen 20 kommt jeweils mindestens ein Kompensator 28 zum Einsatz. Dabei ist in Fig. 6, die mehrere unterschiedliche Ausführungsvarianten in einer Darstellung zeigt, an beiden Enden der in Reihe angeordneten Abgasreinigungselemente 20 jeweils ein Kompensator 28 angeordnet, welcher der Kompensation von thermischen Ausdehnungen und mechanischen Schwingungen dient. Es kann auch nur an einem Ende einer solchen Reihenanordnung 23, und zwar entweder am strömungseintrittsseitigen Ende oder am strömungsaustrittsseitigen Ende der jeweiligen Reihenanordnung 23, ein Kompensator 28 vorhanden sein.

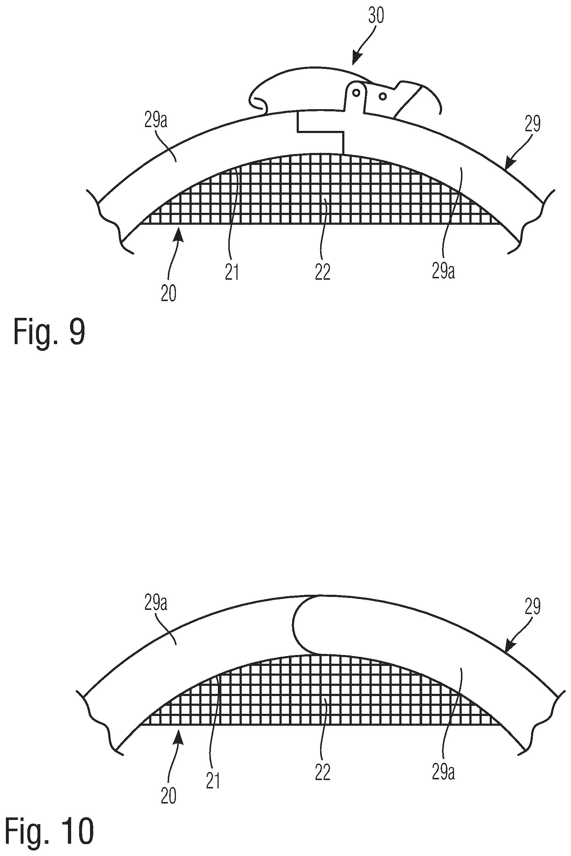

Gemäß Fig. 6 sind die Abgasreinigungselemente 20 einer Reihenanordnung 23 von einer thermischen Isolierung 29 umgeben. Diese thermische Isolierung 29 kann, wie Fig. 9 und 10 zeigen, von Halbschalen 29a gebildet sein, die an ihren aneinander angrenzenden Enden formschlüssig ineinandergreifen und in Fig. 9 über einen Spannverschluss 30 miteinander verbunden sind.

In der oberen Hälfte der Fig. 6 ist eine Ausführung der Kompensatoren 28 gezeigt, in welcher dieselben als integraler Bestandteil des Cannings 20 ausgebildet sind. Die Kompensatoren 28 der oberen Hälfte der Fig. 6 sind demnach als einstückige Verlängerung des jeweiligen Cannings 21 ausgebildet und greifen über eine Flanschverbindung 31 an einer sich anschließenden abgasführenden Baugruppe an. Bei dieser sich anschließenden abgasführenden Baugruppe kann es sich um einen Abschnitt der Überströmkanäle 24 handeln. In der oberen Hälfte der Fig. 6 stößt ein Flansch 32 des jeweiligen Kompensators 28 an einen Flansch 33 des Überströmkanals 24 an, wobei diese Flansche 32, 33 gemäß Fig. 6 über eine V-förmige oder U-förmige Bandschelle 34 verbunden sind.

In der unteren Hälfte der Fig. 6 ist auf der linken Seite ein Kompensator 28 gezeigt, der als separate Baugruppe ausgebildet ist und über jeweils eine Flanschverbindung 31 einerseits zwischen dem Kompensator 28 und dem Canning 21 des angrenzenden Abgasreinigungselements 20 und andererseits zwischen dem Kompensator 28 und dem angrenzenden Abschnitt des Überströmkanals 24 verbunden ist. Ein solcher separater Kompensator 28 kann dann, wenn Abgasreinigungselemente 20 ausgetauscht werden müssen, wiederverwendet werden.

Auf der rechten Seite der unteren Hälfte der Fig. 6 ist gezeigt, dass an einem Ende der Reihenanordnung 23 aus den in Reihe geschalteten Abgasreinigungselementen 20 auf einen Kompensator 28 verzichtet wird, wobei dann hier eine Flanschverbindung 31 unmittelbar zwischen dem Canning 21 des jeweiligen Abgasreinigungselements 20 und dem angrenzenden Abschnitt des Überströmkanals 24 ausgebildet ist.

In Fig. 6 ist zwischen den Cannings 21 der in Reihe geschalteten Abgasreinigungselemente 20 kein weiterer Kompensator 28 angeordnet. Vielmehr stoßen hier die Cannings 21 der in Reihe geschalteten Abgasreinigungselemente 20 unmittelbar aneinander und sind in Fig. 6 über eine Rollschweißnaht 35 unmittelbar miteinander verbunden. Fig. 7 und 8 zeigen Alternativen zur Rollschweißnaht 35 der Fig. 6, um die Cannings 21 von in Reihe geschalteten und unmittelbar aneinander angrenzenden Abgasreinigungselementen 20 miteinander zu verbinden. So sind in Fig. 7 nach außen gebogene Abschnitte der Cannings 21 zwischen Spannbacken 36 angeordnet, die über eine Schraubverbindung miteinander verpresst werden können, um so letztendlich die Cannings 21 der unmittelbar aneinandergrenzenden Abgasreinigungselemente 20 miteinander zu verbinden. In Fig. 8 sind aneinander angrenzende Enden der Cannings 21 abschnittsweise ineinandergesteckt, sodass demnach eines der Cannings 21 an seinem Ende gegenüber dem angrenzenden Canning 21 aufgeweitet ist, um die aneinander angrenzenden Enden der Cannings 21 ineinanderzustecken und dann wiederum vorzugsweise über eine Schweißnaht 37 miteinander zu verbinden.

Fig. 6 kann weiterhin entnommen werden, dass stromaufwärts und/oder stromabwärts der Reihenanordnungen 23 aus in Reihe geschalteten Abgasreinigungselementen 20 Blenden 38 angeordnet sein können, um den Strömungsquerschnitt durch die Reihenanordnungen 23 aus Abgasreinigungselementen 20 einzustellen. So kann entlang der Längserstreckung einer Zylindergruppe 12 aus in Reihe angeordneten Zylindern 11, entlang derer mehrere Reihenanordnungen 28 parallelgeschaltet sind, über die parallelgeschalteten Reihenanordnungen 23 die Abgasströmung vergleichmäßigt werden, um so die Abgasreinigung noch effizienter zu gestalten.

Während Fig. 1 und 2 eine Brennkraftmaschine 10 im R-Bauweise zeigt, zeigen Fig. 3, 4 und 5 Details einer Brennkraftmaschine 10 in V-Bauweise. Hinsichtlich der erfindungswesentlichen Details stimmt die Brennkraftmaschine der Fig. 1, 2 mit der Brennkraftmaschine der Fig. 3, 4 und 5 überein, sodass zur Vermeidung unnötiger Wiederholungen für gleiche Baugruppen gleiche Bezugsziffern verwendet werden.

Auch im Ausführungsbeispiel der Fig. 3 bis 5 erstrecken sich das Abgassammelrohr 12, das Abgaszuleitungsrohr 18 und das Abgasableitungsrohr 19, die jeweils aus mehreren Rohrsegmenten 17a, 18a und 19a mit zwischen den Rohrsegmenten angeordneten Kompensatoren 26 zusammengesetzt sind, entlang der Zylindergruppen 12, also in unmittelbarer Nähe zu den Zylindergruppen 12, wobei auch die Abgasreinigungselemente 20, die wiederum Reihenanordnungen 23 bilden und wobei entlang der Längserstreckung der Rohre 17, 18 und 19 mehrere derartige Reihenanordnungen 23 parallel geschaltet sind. Die Reihenanordnung 23 der Fig. 6 kann sowohl bei der Brennkraftmaschine der Fig. 1, 2 als auch bei der Brennkraftmaschine der Fig. 3, 4 und 5 genutzt werden.

Die Ausführungsbeispiele der Fig. 1, 2 und Fig. 3 bis 5 unterscheiden sich im Wesentlichen lediglich durch die Relativposition der Rohre 17, 18 und 19 zueinander. Während in dem Ausführungsbeispiel der Fig. 1 und 2 das Abgassammelrohr 17 und das Abgaszuleitungsrohr 18 parallel zueinander verlaufend übereinander angeordnet sind und das Abgasableitungsrohr 19 parallel zu denselben seitlich versetzt positioniert ist, sind im Ausführungsbeispiel der Fig. 3, 4 und 5 alle drei Rohre, also das Abgassammelrohr 17, das Abgaszuleitungsrohr 18 und das Abgasableitungsrohr 19, parallel zueinander verlaufend übereinander positioniert.

Daher ist im Ausführungsbeispiel der Fig. 3, 4 und 5 der Überströmkanal 24 ausgehend von den Reihenanordnungen 23 aus Abgasreinigungselementen 20 hinein in das Abgasableitungsrohr 19 auch gekrümmt, wohingegen in Fig. 1 und 2 dieser Überströmkanal 24 zwischen den Reihenanordnungen 23 aus Abgasreinigungselementen 20 und dem Abgasableitungsrohr 19 geradlinig verläuft.

Für das Ausführungsbeispiel der Fig. 3, 4 und 5 ist auch die Schalteinheit 47 gezeigt, welche die Strömungsführung durch die Rohre 17, 18 und 19, also durch das Abgassammelrohr 17, das Abgaszuleitungsrohr 18 und das Abgasableitungsrohr 19, beeinflusst. Diese Schalteinheit 47 ist in Fig. 5 als schwenkbare Klappe ausgebildet, die in Fig. 5 in den Schaltzuständen I und II gezeigt ist.

Dann, wenn die Schalteinheit den Schaltzustand I einnimmt, strömt das Abgas ausgehend vom Abgassammelrohr 17 in das Abgaszuleitungsrohr 18, von dort aus über die Abgasreinigungselemente 20 der Reihenanordnungen 23 und anschließend in das Abgasableitungsrohr 19, um vom Abgasableitungsrohr 19 in Richtung auf den Turbolader 15 zu strömen. Nimmt hingegen in Fig. 5 die Schalteinheit 47 den Zustand II ein, so strömt Abgas, ausgehend vom Abgassammelrohr 17 direkt in Richtung auf den Abgasturbolader 15.

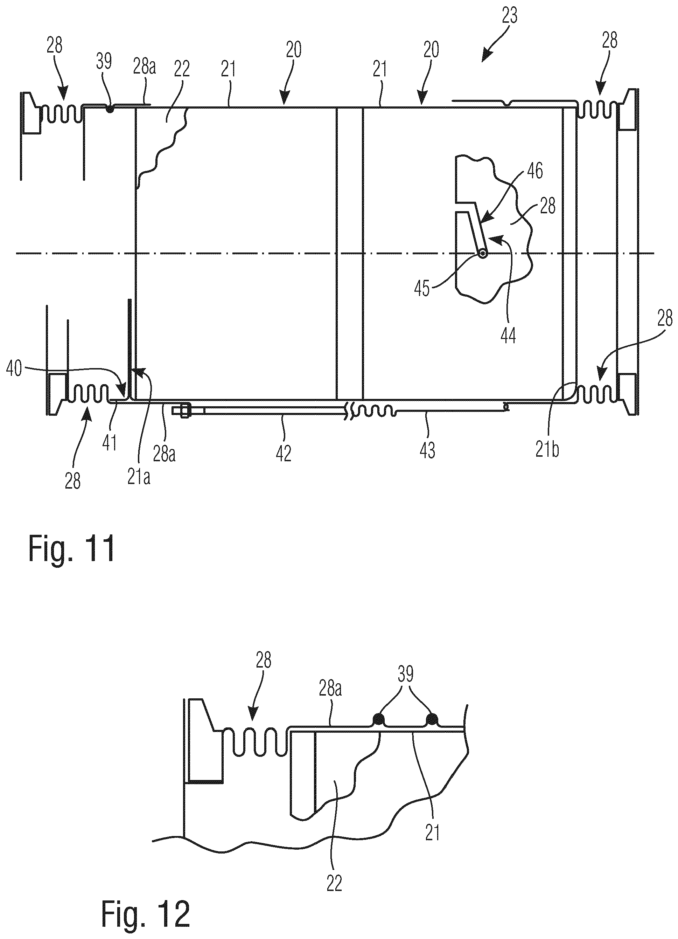

Fig. 11, 12 zeigen Abwandlungen von Reihenanordnungen 23 aus in Reihe angeordneten Abgasreinigungselementen 20, wobei in Fig. 11, 12 die Isolierung 29, welche sich in Fig. 6 radial außen an die in Reihe geschalteten Abgasreinigungselemente 20 anschließt, nicht gezeigt ist. In Fig. 11 sind wiederum mehrere Varianten für die Anbindung der Kompensationselemente 28 an die Cannings 21 von sich unmittelbar anschließenden Abgasreinigungselementen 20 sowie für die Verbindung der zu unterschiedlichen Seiten der Reihenanordnungen 23 angeordneten Kompensatoren 28 gezeigt.

In der oberen Hälfte der Fig. 11 ist auf der linken Seite ein Kompensator 28 gezeigt, der als separate Baugruppe ausgeführt ist und mit einem Abschnitt 28a auf das Canning 21 aufgeschoben ist, wobei zwischen dem auf das Canning 21 aufgeschobenen Abschnitt 28a des Kompensationselements 28 und dem Canning 21 ein Dichtelement 39 angeordnet ist. In der Alternative der Fig. 12 sind zwischen dem auf das Canning aufgeschobenen Abschnitt des Kompensators 28 und dem Canning 21 zwei Dichtelemente 39 angeordnet.

In der unteren Hälfte der Fig. 11 ist an den Abschnitt 28a des Kompensators 28, der auf das Canning 21 des angrenzenden Abgasreinigungselements 20 aufgeschoben ist, ein Element 40 angeschweißt, welches an einem umgebördelten Abschnitt 21a des Cannings 21 des angrenzenden Abgasreinigungselements 20 anliegt. Fig. 11 zeigt eine Schweißnaht 41 zwischen dem Abschnitt 28a des Kompensators 28 und dem angeschweißten Element 40, welches am umgebördelten Abschnitt 21a des Cannings 21 anliegt.

Auf der rechten Seite der Fig. 11 stößt der Kompensator 28 an das Canning 21 an, und zwar im oberen rechten Bereich der Fig. 11 plan die Stirnseite des Cannings 21 und in dem unteren rechten Bereich der Fig. 11 an einem abgewinkelten Vorsprung 21b des Cannings 21.

Die an unterschiedlichen Seiten der Reihenanordnung 23 angeordneten Kompensatoren 28 können gemäß Fig. 11 entweder über einen Zuganker 42 oder alternativ auch über ein Federelement 43 miteinander verbunden sein, um so die Kompensatoren 28 gasdicht gegen die Cannings 21 der angrenzenden Abgasreinigungselemente 20 zu ziehen bzw. zu drücken.

Ferner zeigt Fig. 11 eine Variante, in welcher ein Kompensator 28 über eine Bajonettverbindung 44 auf einem Canning 21 des angrenzenden Abgasreinigungselements 20 befestigt ist, wobei hierbei ein am Canning 21 ausgebildeter Stift 45 in eine entsprechende Nut 46 des Kompensators 28 eingreift. Auch auf diese Weise kann der Kompensator 28 gasdicht am Canning 21 des entsprechenden Abgasreinigungselements 20 befestigt werden.

Bei der erfindungsgemäßen Brennkraftmaschine 10, die mindestens eine Zylindergruppe 12 aus mehreren in Reihe angeordneten Zylindern 11 aufweist, erstrecken sich das Abgassammelrohr 17, das Abgaszuleitungsrohr 18 und das Abgasableitungsrohr 19 jeweils parallel entlang der mindestens einen Zylindergruppe 12 unmittelbar neben den Zylindern 11, wobei zwischen das Abgaszuleitungsrohr 18 und das Abgasableitungsrohr 19 in Längsrichtung derselben und damit in Längsrichtung der mindestens einen Zylindergruppe 12 mehrere Reihenanordnungen 23 aus in Reihe geschalteten Abgasreinigungselementen 20 parallel zueinander geschaltet sind. Die Abgasreinigungselemente 20, nämlich die Katalysatorelemente 22 derselben, sind in einer Richtung senkrecht zur Durchströmungsrichtung des Abgassammelrohrs 17, des Abgaszuleitungsrohrs 18 und des Abgasableitungsrohrs 19 von Abgas durchströmt.

Die Cannings 21 der Abgasreinigungselemente 20 dienen dabei unmittelbar als Druckbehälter und sind auf einen Abgasdruck von bis zu 4 bar oder bis zu 5 bar oder bis zu 6 bar ausgelegt, sodass auf separate Druckbehälter zur Aufnahme der Abgasreinigungselemente 20 verzichtet werden kann. Hierdurch können Bauraum und Masse eingespart werden, sodass eine effiziente Abgasreinigung möglich ist. Aufgrund der geringen Masse verfügt die Abgasreinigungseinrichtung 14 der Brennkraftmaschine 10 über eine geringe thermische Speicherkapazität, sodass ein vorteilhaftes transientes Betriebsverhalten der Brennkraftmaschine 10 gewährleistet werden kann. über die Kompensatoren 26 und 28 können thermische Ausnehmungen und mechanische Schwingungen vorteilhaft kompensiert werden.

### Bezugszeichenliste

- 10: Brennkraftmaschine
- 11: Zylinder
- 12: Zylindergruppe
- 13: Abgasnachbehandlungssystem
- 14: Abgasreinigungseinrichtung
- 15: Abgasturbolader
- 16: Turbine
- 17: Abgassammelrohr
- 17a: Rohabschnitt
- 18: Abgaszuleitungsrohr
- 18a: Rohabschnitt
- 19: Abgasableitungsrohr
- 19a: Rohabschnitt
- 20: Abgasreinigungselement
- 21: Canning
- 21a: Abschnitt
- 21b: Vorsprung
- 22: Katalysatorelement
- 23: Reihenanordnungen
- 24: Überströmkanal
- 25: Abgasauslasskanal
- 26: Kompensator
- 27: Kompensator
- 28: Kompensator
- 28a: Abschnitt
- 29: Isolierung
- 29a: Halbschale
- 30: Spannverschluss
- 31: Flanschverbindung
- 32: Flansch
- 33: Flansch
- 34: Bandschelle
- 35: Rollschweißnaht
- 36: Spannbacke
- 37: Schweißnaht
- 38: Blende
- 39: Dichtelement
- 40: Element
- 41: Schweißnaht
- 42: Zuganker
- 43: Federelement
- 44: Bajonettverbindung
- 45: Stift
- 46: Nut
- 47: Schalteinheit
- 48: Schlauchschelle

## Patentansprüche

1. Brennkraftmaschine (10),
mit mehreren Zylindern (11), die eingerichtet sind, Kraftstoff zu verbrennen, wobei hierbei Abgas entsteht, wobei die Zylinder (11) mindestens eine Zylindergruppe (12) aus mehreren in Reihe angeordneten Zylindern (11) bilden,
mit einem Abgasnachbehandlungssystem (13), welches eine Abgasreinigungseinrichtung (14) umfasst, die eingerichtet ist, das Abgas der Zylinder (11) zu reinigen, und welches mindestens einen Abgasturbolader (15) umfasst, der eingerichtet ist, das Abgas der Zylinder (11) zu entspannen und hierbei Energie zu gewinnen, wobei
die Abgasreinigungseinrichtung (14) mehrere Abgasreinigungselemente (20) aufweist, die jeweils mindestens ein in einem als Druckbehälter dienenden Canning (21) angeordnetes Katalysatorelement (22) aufweisen, wobei eine Wandstärke des jeweiligen Cannings (21) auf einen Abgasdruck bis zu 4 bar oder bis zu 5 bar oder bis zu 6 bar oder bis zu 10 bar ausgelegt ist,
die Abgasreinigungseinrichtung (14) ein sich entlang der mindestens einen Zylindergruppe (12) erstreckendes Abgassammelrohr (17), ein sich entlang der mindestens einen Zylindergruppe (12) erstreckendes Abgaszuleitungsrohr (18) und ein sich entlang der mindestens einen Zylindergruppe (12) erstreckendes Abgasableitungsrohr (19) aufweist, über die das Abgas derart leitbar ist,
dass ausgehend von einem Abgasauslasskanal (25) des jeweiligen Zylinders (11) das Abgas desselben dem Abgassammelrohr (17) zuführbar ist, **dadurch gekennzeichnet,**
**dass** abhängig von einem Schaltzustand einer Schalteinheit (47)
das Abgas in einem ersten Schaltzustand der Schalteinheit (47) ausgehend vom Abgassammelrohr (17) in das Abgaszuleitungsrohr (18), über das Abgaszuleitungsrohr (18) in Richtung auf die Abgasreinigungselemente (20), nach Durchströmung der Abgasreinigungselemente (20) in das Abgasableitungsrohr (19) und über das Abgasableitungsrohr (19) in Richtung auf den mindestens einen Abgasturbolader (15) leitbar ist,
das Abgas in einem zweiten Schaltzustand der Schalteinheit (47) unter Umgehung der Abgasreinigungselemente (20) ausgehend Abgassammelrohr (17) unmittelbar in Richtung auf den mindestens einen Abgasturbolader (15) leitbar ist,
das Abgassammelrohr (17), das Abgaszuleitungsrohr (18) und das Abgasableitungsrohr (19) jeweils mehrere Rohrabschnitte (17a, 18a, 19a) mit zwischen den Rohabschnitten (17a, 18a, 19a) angeordneten Kompensatoren (26) zur Kompensation von thermischen Ausdehnungen aufweisen,
mit den Abgasreinigungselementen (20) Kompensatoren (28) zur Kompensation von thermischen Ausdehnungen und zur Schwingungskompensation zusammenwirken.

2. Brennkraftmaschine (10) nach Anspruch 1, **dadurch gekennzeichnet, dass**
die Abgasreinigungselemente (20), nämlich die Katalysatorelemente (22) derselben, in einer Richtung senkrecht zur Durchströmungsrichtung des Abgassammelrohrs (17), des Abgaszuleitungsrohrs (18) und des Abgasableitungsrohrs (19) von Abgas durchströmt sind.

3. Brennkraftmaschine (10) nach Anspruch 1 oder 2, **dadurch gekennzeichnet, dass**
die Wandstärke der Cannings (21) zwischen 1,5 mm und 6 mm beträgt.

4. Brennkraftmaschine (10) nach Anspruch 1, 2 oder 3, **dadurch gekennzeichnet, dass**
stromaufwärts oder stromabwärts der Abgasreinigungselemente (20) Blenden (28) angeordnet sind, um entlang der mindestens einen Zylindergruppe (12) die Abgasströmung über die Abgasreinigungselemente (20) zu vergleichmäßigen.

5. Brennkraftmaschine (10) nach einem der Ansprüche 1 bis 4, **dadurch gekennzeichnet, dass**
jeweils mehrere, vorzugsweise zwei oder drei, Abgasreinigungselemente (20) in Reihe hintereinander und entlang der mindestens einen Zylindergruppe (12) mehrere solche Reihenanordnungen (23) aus Abgasreinigungselementen (20) parallel zueinander zwischen das Abgaszuleitungsrohr (18) und das Abgasableitungsrohr (19) geschaltet sind.

6. Brennkraftmaschine (10) nach Anspruch 5, **dadurch gekennzeichnet, dass** im Bereich jeder Reihenanordnungen (23) aus Abgasreinigungselementen (20) die Cannings (21) von unmittelbar aneinander angrenzenden miteinander Abgasreinigungselementen (20) verbunden sind.

7. Brennkraftmaschine (10) nach Anspruch 5 oder 6, **dadurch gekennzeichnet, dass**
im Bereich jeder Reihenanordnungen (23) aus Abgasreinigungselementen (20) stromaufwärts und/oder stromabwärts der Abgasreinigungselemente (20) jeweils ein Kompensator (28) zur Kompensation von thermischen Ausdehnungen und zur Schwingungskompensation angeordnet ist.

8. Brennkraftmaschine (10) nach Anspruch 7, **dadurch gekennzeichnet, dass**
der jeweilige Kompensator (28) zur Kompensation von thermischen Ausdehnungen und zur Schwingungskompensation integraler Bestandteil des jeweiligen Cannings (21) ist.

9. Brennkraftmaschine (10) nach Anspruch 7, **dadurch gekennzeichnet, dass**
der jeweilige Kompensator (28) zur Kompensation von thermischen Ausdehnungen und zur Schwingungskompensation als separate Baugruppe ausgebildet ist, die mit dem Canning (21) des angrenzenden Abgasreinigungselements (20) oder mit einem weiteren Kompensator (28) der jeweiligen Reihenanordnung (23) verbunden ist.

10. Brennkraftmaschine (10) nach einem der Ansprüche 1 bis 9, **dadurch gekennzeichnet, dass**
die Schalteinheit (47) eine Klappe aufweist, die entweder eine direkte Abgasströmung vom Abgassammelrohr (17) zum Abgasturbolader (15) freigibt oder eine direkte Abgasströmung vom Abgassammelrohr (17) zum Abgasturbolader (15) versperrt.

## Claims

1. An internal combustion engine (10),
having multiple cylinders (11), which are equipped for combusting fuel, wherein in the process exhaust gas is created, wherein the cylinders (11) form at least one cylinder bank (12) of multiple cylinders (11) arranged in series,
having an exhaust gas after-treatment system (13), which includes an exhaust gas purification device (14), which is configured to purify the exhaust gas of the cylinders (11), and which includes at least one exhaust gas turbocharger (15), which is configured for expanding the exhaust gas of the cylinders (11) and extract energy in the process,
wherein the exhaust gas purification device (14) comprises multiple exhaust gas purification elements (20), each of which comprises at least one catalyst element (22) arranged in a canning (21) serving as pressure vessel,
wherein a wall thickness of the respective canning (21) is designed for an exhaust gas pressure of up to 4 bar, or of up to 5 bar, or of up to 6 bar, or of up to 10 bar,
the exhaust gas purification device (14) comprises an exhaust gas manifold pipe (17) extending along the at least one cylinder bank (12), an exhaust gas supply pipe (18) extending along the at least one cylinder bank (12) and an exhaust gas discharge pipe (19) extending along the at least one cylinder bank (12), via which the exhaust gas can be conducted in such a manner,
that emanating from an exhaust gas outlet port (25) of the respective cylinder (11) the exhaust gas of the same can be fed to the exhaust gas manifold pipe (17),
**characterised in that** depending on a switching state of a switching unit (47) the exhaust gas in a first switching state of the switching unit (47), emanating from the exhaust gas manifold pipe (17), can be conducted into the exhaust gas supply pipe (18), via the exhaust gas supply pipe (18) in the direction of the exhaust gas purification elements (20), having flowed through the exhaust gas purification elements (20), into the exhaust gas discharge pipe (19) and via the exhaust gas discharge pipe (19) in the direction of the at least one exhaust gas turbocharger (15),
the exhaust gas in a second switching state of the switching unit (47) bypassing the exhaust gas purification elements (20), emanating from the exhaust gas manifold pipe (17) can be conducted directly in the direction of the at least one exhaust gas turbocharger (15),
the exhaust gas manifold pipe (17), the exhaust gas supply pipe (18) and the exhaust gas discharge pipe (19) each, comprise multiple pipe sections (17a, 18a, 19a) with compensators (26) arranged between the pipe sections (17a, 18a, 19a) for compensation of thermal expansions,
compensators (28) for compensation of thermal expansions and for vibration compensation interact with the exhaust gas purification elements (20.

2. The internal combustion engine (10) according to Claim 1,
**characterised in that** the exhaust gas purification elements (20), namely, the catalyst elements (22) of the same, are flowed through by exhaust gas in a direction perpendicular to the flow direction of the exhaust gas manifold pipe (17), of the exhaust gas supply pipe (18) and of the exhaust gas discharge pipe (19).

3. The internal combustion engine (10) according to Claim 1 or 2,
**characterised in that** the wall thickness of the cannings (21) amounts to between 1.5 mm and 6 mm.

4. The internal combustion engine (10) according to Claim 1, 2 or 3,
**characterised in that** upstream or downstream of the exhaust gas purification elements (20) baffles (28) are arranged in order to equalise the exhaust gas flow via the exhaust gas purification elements (20) along the at least one cylinder bank (12).

5. The internal combustion engine (10) according to any one of the Claims 1 to 4,
**characterised in that** multiple, preferentially 2 or 3 exhaust gas purification elements (20) are each connected in series one behind the other and along the at least one cylinder bank (12) multiple such series arrangements (23) of exhaust gas purification elements (20) are connected parallel to one another between the exhaust gas supply pipe (18) and the exhaust gas discharge pipe (19).

6. The internal combustion engine (10) according to Claim 5,
**characterised in that** in the region of each series arrangements (23) of exhaust gas purification elements (20), the cannings (21) of exhaust gas purification elements (20) directly adjoining one another are connected to one another.

7. The internal combustion engine (10) according to Claim 5 or 6,
**characterised in that** in the region of each series arrangements (23) of exhaust gas purification elements (20) upstream and/or downstream of the exhaust gas purification elements (20) a compensator (28) each for compensating thermal expansions and for vibration compensation is arranged.

8. The internal combustion engine (10) according to Claim 7,
**characterised in that** the respective compensator (28) for the compensation of thermal expansions and for the vibration compensation is an integral part of the respective canning (21).

9. The internal combustion engine (10) according to Claim 7,
**characterised in that** the respective compensator (28) for the compensation of thermal expansions and for the vibration compensation is designed as separate assembly, which is connected to the canning (21) of the adjoining exhaust gas purification element (20), or to a further compensator (28) of the respective series arrangement (23).

10. The internal combustion engine (10) according to any one of the Claims 1 to 9,
**characterised in that** the switching unit (47) comprises a flap, which either opens a direct exhaust gas flow from the exhaust gas manifold pipe (17) to the exhaust gas turbocharger (15), or blocks a direct exhaust gas flow from the exhaust gas manifold pipe (17) to the exhaust gas turbocharger (15).

## Revendications

1. Moteur à combustion interne (10),
comportant plusieurs cylindres (11) configurés pour brûler du carburant, dans lequel des gaz d'échappement sont ainsi générés, dans lequel les cylindres (11) forment au moins un groupe de cylindres (12) constitué de plusieurs cylindres (11) montés en série,
comportant un système de post-traitement des gaz d'échappement (13), qui comprend un dispositif de purification des gaz d'échappement (14), qui est configuré pour purifier les gaz d'échappement des cylindres (11) et qui comprend au moins un turbocompresseur de gaz d'échappement (15) configuré pour détendre les gaz d'échappement des cylindres (11) et ainsi récupérer de l'énergie, dans lequel
le dispositif de purification des gaz d'échappement (14) présente plusieurs éléments de purification des gaz d'échappement (20), qui présentent respectivement au moins un élément catalytique (22) disposé dans un carter (21) servant de récipient sous pression,
dans lequel une épaisseur de paroi du carter (21) respectif est conçue pour une pression de gaz d'échappement allant jusqu'à 4 bar ou jusqu'à 5 bar ou jusqu'à 6 bar ou jusqu'à 10 bar,
le dispositif de purification des gaz d'échappement (14) présente un collecteur de gaz d'échappement (17) s'étendant le long d'au moins un groupe de cylindres (12), un tuyau d'alimentation en gaz d'échappement (18) s'étendant le long d'au moins un groupe de cylindres (12) et un tuyau d'évacuation des gaz d'échappement (19) s'étendant le long d'au moins un groupe de cylindres (12),
permettant d'acheminer les gaz d'échappement de sorte que, partant d'un canal de sortie de gaz d'échappement (25) du cylindre (11) respectif, les gaz d'échappement de ce cylindre soient acheminés vers le collecteur de gaz d'échappement (17),
**caractérisé en ce que**, en fonction d'un état de commutation d'une unité de commutation (47), les gaz d'échappement, dans un premier état de commutation de l'unité de commutation (47), partent du collecteur de gaz d'échappement (17) et entrent dans le tuyau d'alimentation en gaz d'échappement (18), puis, via le tuyau d'alimentation en gaz d'échappement (18), dans la direction des éléments de purification des gaz d'échappement (20), après le passage des éléments de purification des gaz d'échappement vers le tuyau d'évacuation des gaz d'échappement (19) et via le tuyau d'évacuation des gaz d'échappement (19) vers au moins un turbocompresseur de gaz d'échappement (15),
les gaz d'échappement, dans un deuxième état de commutation de l'unité de commutation (47), contournent les éléments de purification des gaz d'échappement (20) et sortent par le tuyau collecteur des gaz d'échappement (17) directement vers au moins un turbocompresseur de gaz d'échappement (15),
le tuyau collecteur des gaz d'échappement (17), le tuyau d'alimentation en gaz d'échappement (18) et le tuyau d'évacuation des gaz d'échappement (19) présentent respectivement plusieurs sections de tuyau (17a, 18a, 19a) avec des compensateurs (26) disposés entre les sections de tuyau (17a, 18a, 19a), pour compenser la dilatation thermique,
les compensateurs (28) coopèrent avec les éléments de purification des gaz d'échappement (20) pour compenser la dilatation thermique et les vibrations.

2. Moteur à combustion interne (10) selon la revendication 1,
**caractérisé en ce que** les éléments de purification des gaz d'échappement (20), à savoir les éléments catalytiques (22), sont traversés par les gaz d'échappement dans une direction perpendiculaire à la direction d'écoulement du collecteur de gaz d'échappement (17), du tuyau d'alimentation en gaz d'échappement (18) et du tuyau d'évacuation des gaz d'échappement (19).

3. Moteur à combustion interne (10) selon la revendication 1 ou 2,
**caractérisé en ce que** l'épaisseur de paroi du carter (21) est comprise entre 1,5 mm et 6 mm.

4. Moteur à combustion interne (10) selon la revendication 1, 2 ou 3,
**caractérisé en ce que** des orifices (28) sont disposés en amont ou en aval des éléments de purification des gaz d'échappement (20) afin de diviser le flux des gaz d'échappement au-dessus des éléments de purification des gaz d'échappement (20) le long d'au moins un groupe de cylindres (12).

5. Moteur à combustion interne (10) selon une des revendications 1 à 4,
**caractérisé en ce que** plusieurs éléments de purification des gaz d'échappement, de préférence deux ou trois (20) sont disposés en série, l'un derrière l'autre et le long d'au moins un groupe de cylindres (12), plusieurs de ces séries (23) d'éléments de purification des gaz d'échappement (20) sont raccordées parallèlement les unes aux autres entre le tuyau d'alimentation en gaz d'échappement (18) et le tuyau d'évacuation des gaz d'échappement (19).

6. Moteur à combustion interne (10) selon la revendication 5,
**caractérisé en ce que** au niveau de chaque série (23) d'éléments de purification des gaz d'échappement (20) les carters (21) des éléments de purification des gaz d'échappement (20) immédiatement adjacents sont raccordés.

7. Moteur à combustion interne (10) selon la revendication 5 ou 6,
**caractérisé en ce que** dans le périmètre de chaque série (23) d'éléments de purification des gaz d'échappement (20), un compensateur (28) pour compenser la dilatation thermique et les vibrations est disposé en amont et/ou en aval des éléments de purification des gaz d'échappement (20).

8. Moteur à combustion interne (10) selon la revendication 7,
**caractérisé en ce que** le compensateur (28) correspondant pour compenser la dilatation thermique et les vibrations fait partie intégrante du carter (21) correspondant.

9. Moteur à combustion interne (10) selon la revendication 7,
**caractérisé en ce que** le compensateur (28) correspondant pour compenser la dilatation thermique et les vibrations est configuré comme un ensemble séparé, qui est relié soit au carter (21) de l'élément de purification des gaz d'échappement adjacent (20), soit à un autre compensateur (28) de la série respective (23).

10. Moteur à combustion interne (10) selon une des revendications 1 à 9,
**caractérisé en ce que** l'unité de commutation (47) présente un clapet, qui soit permet un flux direct de gaz d'échappement du collecteur de gaz d'échappement (17) vers le turbocompresseur de gaz d'échappement (15), soit bloque un flux direct de gaz d'échappement du collecteur de gaz d'échappement (17) vers le turbocompresseur de gaz d'échappement (15).
